Europäisches Patentamt

European Patent Office

Office européen des brevets

(19)

(11) Veröffentlichungsnummer: **0 199 226**
**B1**

(12) **EUROPÄISCHE PATENTSCHRIFT**

(45) Veröffentlichungstag der Patentschrift: 20.06.90

(51) Int. Cl.⁵: **B 32 B 25/14**

(21) Anmeldenummer: **86105039.1**

(22) Anmeldetag: **12.04.86**

(54) Gummiartikel aus unterschiedlichen Gummischichten, ihre Herstellung und Verwendung.

(30) Priorität: **24.04.85 DE 3514697**

(43) Veröffentlichungstag der Anmeldung:
**29.10.86 Patentblatt 86/44**

(45) Bekanntmachung des Hinweises auf die
Patenterteilung:
**20.06.90 Patentblatt 90/25**

(84) Benannte Vertragsstaaten:
**DE FR GB IT**

(56) Entgegenhaltungen:
**DE-A-3 226 081**
**DE-A-3 338 865**

(73) Patentinhaber: **BAYER AG**
**D-5090 Leverkusen 1 Bayerwerk (DE)**

(72) Erfinder: **Königshofen, Heinrich, Dr.**
**Am Mühlenberg 26**
**D-5060 Bergisch Gladbach 2 (DE)**
Erfinder: **Szentivanyi, Zsolt, Dr.**
**Carl-Rumpff-Strasse 9**
**D-5090 Leverkusen 1 (DE)**

(56) Entgegenhaltungen:
**CHEMICAL ABSTRACTS, Band 100, Nr. 18, 30.**
**April 1984, Seite 72, Zusammenfassung Nr.**
**140647z, Columbus, Ohio, US; & JP-A-58 178**
**083 (TOKAI RUBBER INDUSTRIES LTD) 18-10-**
**1983**

Die Akte enthält technische Angaben, die nach
dem Eingang der Anmeldung eingereicht
wurden und die nicht in dieser Patentschrift
enthalten sind.

EP 0 199 226 B1

**Beschreibung**

Es ist bekannt, Gummiartikel aus Schichten unterschiedlicher Elastomerer aufzubauen und diese Schichten möglichst fest miteinander zu verbinden, um sich die unterschiedlichen günstigen Eigenschaften der Elastomeren zunutze zu machen.

So beschreibt die EP—A—89 162 einen Kraftstoffschlauch mit Fluorkautschukinnenseele und einer aus anderen Elastomeren bestehenden Außenschicht, da Fluorkautschuk gegen flüssige Kohlenwasserstoffe besonders beständig ist. Nach außen trägt dieser Schlauch beispielsweise einen EPDM-Kautschuk (Terpolymerisat aus Ethylen, Propylen und 5-Ethyliden-2-norbornen), um besonders ozonbeständig zu sein. Nachteilig an diesem Schlauch ist, daß durch die Vulkanisation nur eine unzureichende Haftung der EPDM-Schicht auf dem Fluorkautschuk erzielt wird und die Haftung der Schichten mit einem speziellen Klebstoff durchgeführt werden muß. Weitere Kombinationsmöglichkeiten, speziell für Schläuche, sind in Rubber Chem. and Technology, *56*, Seite 557, beschrieben.

Aufgabe der vorliegenden Erfindung war die Bereitstellung von Gummiartikeln aus mindestens zwei Schichten aus mindestens zwei unterschiedlichen Elastomeren, wobei die Elastomeren durch Schwefelvulkanisation gehärtet und mit der jeweils benachbarten Schicht verbunden werden, die ohne die Verwendung von Spezialchemikalien oder Klebstoffen auskommt.

Diese Aufgabe wird überraschenderweise dadurch gelöst, daß man als erstes Elastomer einen Dienkautschuk und als zweites Elastomer einen hydrierten NBR-Kautschuk (Butadien-Acrylnitril-Copolymerisat) mit einem Hydrierungsgrad von 85 bis 99,7%, insbesondere von 94 bis 98% verwendet, wobei der hydrierte NBR-Kautschuk einen Acrylnitrilgehalt von 16 bis 49 Gew.-%, insbesondere von 30 bis 45 Gew.-% aufweist.

Als Dienkautschuke kommen NBR, SBR (Styrol-Butadien-Copolymerisat), CR(Polychloropren), BR (Polybutadien) oder NR (Naturkautschuk) in Frage.

Die Herstellung der Gummiartikel geschieht beispielsweise so, daß aus den einzelnen Kautschuken Plätten hergestellt werden, die alle erforderlichen Kautschukchemikalien enthalten, aber unvulkanisiert sind. Zwei Platten werden dann aufeinander gelegt und unter geringem Druck miteinander bei 140 bis 200°C vulkanisiert.

Die Schwefelmenge ist nicht kritisch und kann 0,1 bis 5 Gew.-%, bezogen auf Kautschukfeststoff betragen.

Die erfindungsgemäßen Gummiartikel eignen sich insbesondere zur Herstellung von Walzen, Transportbändern, Schläuchen oder Riemen.

Die Trennfestigkeit ist ausgezeichnet und befindet sich auf dem Niveau einer Peroxidvernetzung. Die Gummiartikel haben aber die bekannten Vorteile die mit einer Schwefelvulkanisation erreicht werden.

## BEISPIEL

Es werden die folgenden Elastomeren verwendet:

HNBR I: Hydriertes Butadien-Acrylnitril-Copolymerisat mit einem Acrylnitrilgehalt von 34 Gew.-%, einer Mooney-Viskosität von 70 ML (1 + 4) 100°C und einem Restdoppelbindungsgehalt von 0,5% (DIN 53523).

HNBR II: wie HNBR I mit Restdoppelbindungsgehalt 5%.

NBR I: Butadien-Acrylnitril-Copolymerisat mit einem Acrylnitrilgehalt von 28 Gew.-% und einer Mooney-Viskosität von 45 ML (1 + 4) 100°C.

NBR II: wie NBR I mit 34 Gew.-% Acrylnitril und einer Mooney-Viskosität von 30 ML (1 + 4) 100°C.

CR I: Polychloropren mit einer Mooney-Viskosität von 45 ML (1 + 4) 100°C.

EPDM I: Terpolymerisat aus Ethylen, Propylen und 5-Ethyliden-2-norbornen mit einem Ethylengehalt von 46 Gew.-%, einem Propylengehalt von 48 Gew.-% und einer Mooney-Viskosität von 45 ML (1 + 4) 100°C.

EPDM II: wie EPDM I mit einer Mooney-Viskosität von 110 ML (1 + 4) 100°C.

SBR: Styrol-Butadien-Copolymerisat mit einem Styrolgehalt von 23,5 Gew.-% und einer Mooney-Viskosität von 50 ML (1 + 4) 100°C.

| Mischungs-Nr. | 1 | 2 | 3 | 4 | 5 | 6 | 7 | 8 | 9 | 10 |
|---|---|---|---|---|---|---|---|---|---|---|
| HNBR I | 100,0 | 100,0 | 100,0 | — | — | — | — | — | — | — |
| HNBR II | — | — | — | 100,0 | — | — | — | — | — | — |
| NBR I | — | — | — | — | 100,0 | — | — | — | — | — |
| NBR II | — | — | — | — | — | 100,0 | — | — | — | — |
| CR I | — | — | — | — | — | — | 100,0 | — | — | — |
| SBR | — | — | — | — | — | — | — | 100,0 | — | — |
| EPDM I | — | — | — | — | — | — | — | — | 100,0 | — |
| EPDM II | — | — | — | — | — | — | — | — | — | 100,0 |
| Merkaptosilan | — | — | — | 1,4 | — | — | — | — | — | — |
| Kieselsäure | 50,0 | — | — | 40,0 | 45,0 | — | — | 45,0 | — | — |
| aromatischer Polyether | — | 5,0 | 5,0 | — | 5,0 | 5,0 | 5,0 | 5,0 | 5,0 | 5,0 |
| ZnO | 2,0 | 3,0 | 3,0 | 3,0 | 4,0 | 3,0 | 5,0 | 4,0 | 3,0 | 3,0 |
| Stearinsäure | 0,5 | 1,0 | 0,5 | 0,5 | 1,0 | 1,0 | 1,0 | 1,0 | 1,0 | 0,5 |
| MgO | 10,0 | 3,0 | — | 3,0 | — | — | 4,0 | — | — | — |
| Ruß N 347 | — | — | 20,0 | — | — | — | — | — | — | 20,0 |
| Ruß N 762 | — | — | 40,0 | — | — | — | — | — | — | 40,0 |
| Ruß N 774 | — | 50,0 | — | — | — | 50,0 | 50,0 | — | 50,0 | — |
| Ester (Polyglykol) | — | 5,0 | — | — | 10,0 | 5,0 | 5,0 | 10,0 | 5,0 | — |

EP 0 199 226 B1

EP 0 199 226 B1

| Mischungs-Nr. | 1 | 2 | 3 | 4 | 5 | 6 | 7 | 8 | 9 | 10 |
|---|---|---|---|---|---|---|---|---|---|---|
| Ether-Thioether | — | — | — | 5,0 | — | — | — | — | — | — |
| Trioctyltrimellithat | 10,0 | — | — | — | — | — | — | — | — | — |
| ASM I | 0,8 | — | — | 2,0 | — | — | — | — | — | — |
| ASM II | 1,0 | — | — | 1,0 | — | — | — | — | — | — |
| Schwefel (80%ig) | — | 0,5 | 1,9 | — | 1,9 | 1,9 | — | 1,9 | 1,9 | 1,9 |
| Schwefel (95%ig) | — | — | — | 0,1 | — | — | — | — | — | — |
| Fettsäure-Salz-Gemisch | 1,0 | — | — | — | — | — | — | — | — | — |
| CBS | — | — | 1,8 | — | 1,8 | — | — | 1,8 | — | 1,8 |
| ETU | — | — | — | — | — | — | 0,8 | — | — | — |
| MBT | — | — | 1,5 | — | — | — | — | — | — | 1,5 |
| MBTS | — | — | — | — | — | 1,2 | — | — | — | — |
| MBSS | — | 1,5 | 1,0 | 1,8 | — | — | — | — | 1,5 | 1,0 |
| TMTD | — | 1,0 | 1,5 | 3,0 | — | — | 0,4 | — | 1,5 | 1,5 |
| Triallylisocyanurat | 1,5 | — | — | — | — | — | — | — | — | — |
| Bis-(tert.-butylperoxiiso-propyl)-benzol (40%ig) | 8.0 | — | — | — | — | — | — | — | — | — |

| Mischungs-Nr. | 1 | 2 | 3 | 4 | 5 | 6 | 7 | 8 | 9 | 10 |
|---|---|---|---|---|---|---|---|---|---|---|
| **Vulkameter 170°C** | | | | | | | | | | |
| t 10 (min) | 2,5 | 5,4 | 2,4 | 3,6 | 5,7 | 3,7 | 2,5 | 6,4 | 4,1 | 1,0 |
| t 70 (min) | 9,0 | 8,2 | 4,7 | 5,2 | 10,7 | 6,5 | 6,8 | 12,9 | 6,9 | 2,2 |
| t 90 (min) | 16,5 | 9,3 | 9,2 | 6,2 | 16,4 | 9,8 | 14,1 | 19,1 | 11,1 | 9,7 |
| F min (cN) | 828 | 137 | 226 | 421 | 316 | 46 | 194 | 204 | 99 | 408 |
| F max (cN) | 9278 | 3276 | 4539 | 7248 | 2956 | 2927 | 5609 | 2366 | 6216 | 7845 |
| **Vulkanisation Slab. II (DIN 53504) 170°C** | | | | | | | | | | |
| Vulkanisationszeil (min) | 20 | 15 | 15 | 15 | 20 | 15 | 20 | 25 | 15 | 15 |
| Zugfestigkeit (MPa) | 25,1 | 16,3 | 28,4 | 38,9 | 17,9 | 14,0 | 15,6 | 13,5 | 5,4 | 12,0 |
| Bruchdehnung (%) | 490 | 740 | 630 | 450 | 790 | 820 | 330 | 890 | 300 | 210 |
| Spannung bi 100(%)(MPa) | 2,4 | 2,7 | 3,0 | 3,4 | 1,6 | 2,3 | 5,6 | 0,9 | 3,0 | 5,2 |
| Spannung bei 200(%)(MPa) | 4,0 | 4,8 | 7,5 | 7,5 | 2,6 | 4,0 | 11,9 | 1,4 | 4,2 | — |
| Struktur n. Pohle (N) | — | 157 | — | — | — | 149 | 160 | — | 99 | — |
| Härte (Shore A) | 73 | 68 | 75 | 72 | 63 | 62 | 72 | 50 | 70 | 80 |

EP 0 199 226 B1

Trennfestigkeit in N / 25 mm

| | | HNBR I | HNBR I | HNBR I | HNBR II | NBR I | NBR II | CR I | SBR | EPDM I | EPDM II |
|---|---|---|---|---|---|---|---|---|---|---|---|
| | | 1 | 2 | 3 | 4 | 5 | 6 | 7 | 8 | 9 | 10 |
| HNBR I | 1 | | | | 297 | | | 348 | | | |
| HNBR I | 2 | | 225 | | | | 207 | 251 | | 0 | |
| HNBR I | 3 | | | | | 273 | | | 182 | | |
| HNBR II | 4 | | | | | 258 | | | 161 | | |
| NBR I | 5 | | | | | | | | | | 29 |
| NBR II | 6 | | | | | | 253 | | | 0 | |
| CR I | 7 | | | | | | | | | 0 | |
| SBR | 8 | | | | | | | | | | 75 |
| EPDM I | 9 | | | | | | | | | | |
| EPDM II | 10 | | | | | | | | | | |

EP 0 199 226 B1

* Bruch im Gummi

Die Abkürzungen auf Seite 5 haben folgende Bedeutungen:

| | |
|---|---|
| ASMI: | Styrolisiertes Diphenylamin (Alterungsshutzmittel) |
| ASMII: | Zinksalz des Mercaptobenzimidazols (Alterungsschutzmittel) |
| CBS: | Benzothiazyl-2-cyclohexylsulfenamid |
| ETU: | 2-Mercaptoimidazolin |
| MBT: | Mercaptobenzimidazol |
| MBTS: | Benzothiazyldisulfid |
| MBSS: | 2-(4-Morpholinyldithio)-benzothiazol |
| TMTD: | Tetraethylthiuramidisulfid |

## Patentansprüche

1. Gummiartikel aus mindestens zwei fest miteinander verbundenen Schichten A und B aus Elastomeren, wobei man für Schicht A einen Dienkautschuk aus der Reihe NBR, SBR, CR, BR oder NR und für Schicht B einen hydrierten NBR-Kautschuk mit einem Hydriergrad von 85 bis 99,7% und einem Acrylnitrilgehalt von 16 bis 49 Gew.-% verwendet.

2. Gummiartikel nach Anspruch 1, wobei der hydrierte NBR-Kautschuk einen Hydrierungsgrad von 94 bis 98% und einen Acrylnitrilgehalt von 30 bis 45 Gew.-% aufweist.

3. Gummiartikel nach Anspruch 1, dadurch gekennzeichnet, daß die Elastomeren mit Schwefel gehärtet und mit der jeweils anderen Schicht verbunden werden.

4. Verfahren zur Herstellung von Gummiartikeln aus mindestens zwei fest miteinander verbundenen Schichten A und B aus Elastomeren, wonach man die Schichten aus unvulkanisierten, Schwefel enthaltenden Elastomeren aufeinander bringt und bei 140 bis 200°C vulkanisiert, dadurch gekennzeichnet, daß man für Schicht A einen Dienkautschuk aus der Reihe NBR, SBR, CR, BR oder NR und für Schicht B einen hydrierten NBR-Kautschuk mit einem Hydriergrad von 85 bis 99,7% und einem Acrylnitrilgehalt von 16 bis 49 Gew.-% verwendet.

5. Verwendung der Gummiartikel gemäß Anspruch 1 zur Herstellung von Walzen, Transportbändern, Schläuchen oder Riemen.

## Revendications

1. Articles en caoutchouc constitués d'au moins deux couches A et B d'élastomères solidement liées ensemble, dans lesquels on utilise pour la couche A un caoutchouc diénique de la série NBR, SBR, CR, BR ou NR et, pour la couche B, un caoutchouc NBR hydrogéné ayant un degré d'hydrogénation de 85 à 99,7% et une teneur en acrylonitrile de 16 à 49% en poids.

2. Articles en caoutchouc suivant la revendication 1, dans lesquels le caoutchouc NBR hydrogéné a un degré d'hydrogénation de 94 à 98% et une teneur en acrylonitrile de 30 à 45% en poids.

3. Articles en caoutchouc suivant la revendication 1, caractérisés en ce que les élastomères sont vulcanisés avec du soufre et liés à l'autre couche concernée.

4. Procédé de production d'articles en caoutchouc formés d'au moins deux couches A et B d'élastomères solidement liées l'une à l'autre, dans lequel on dispose l'une sur l'autre les couches d'élastomères non vulcanisés contenant du soufre et on les vulcanise à une température de 140 à 200°C, caractérisé en ce qu'on utilise pour la couche A un caoutchouc diénique de la série NBR, SBR, CR, BR ou NR et pour la couche B, un caoutchouc NBR hydrogéné ayant un degré d'hydrogénation de 85 à 99,7% et une teneur en acrylonitrile de 16 à 49% en poids.

5. Utilisation des articles en caoutchouc suivant la revendication 1 pour la fabrication de rouleaux, de bandes transporteuses, de tuyaux souples ou de courroies.

## Claims

1. Rubber articles of at least two layers A and B of elastomers joined firmly to one another, a diene rubber from the series NBR, SBR, CR, BR or NR being used for layer A and a hydrogenated NBR rubber having a degree of hydrogenation of 85 to 99.7% and an acrylonitrile content of 16 to 49% by weight being used for layer B.

2. Rubber articles as claimed in claim 1, in which the NBR rubber has a degree of hydrogenation of 94 to 98% and an acrylonitrile content of 30 to 45% by weight.

3. Rubber articles as claimed in claim 1, characterized in that the elastomers are hardened with sulfur and are joined to the other layer.

4. A process for the production of rubber articles of at least two layers A and B joined firmly to one another, the layers of unvulcanized sulfur-containing elastomers being applied to one another and vulcanized at 140 to 200°C, characterized in that a diene rubber from the series NBR, SBR, CR, BR or NR is used for layer A and a hydrogenated NBR rubber having a degree of hydrogenation of 85 to 99.7% and an acrylonitrile of 16 to 49% by weight is used for layer B.

5. The use of the rubber articles claimed in claim 1 for the production of rollers, conveyor belts, hoses or belts.